# EUROPEAN PATENT APPLICATION

(11) **EP 4 793 102 A1**
(43) Date of publication of application: **19.08.2026**
(21) Application number: 26157374.5
(22) Date of filing: 09.02.2026
(51) Int. Cl.: B60R 11/02, B60K 35/20, B60K 35/22, B60K 35/50, B60R 21/055

(54) **DISPLAY UNIT MOUNTING BRACKET**

(30) Priority: 14.02.2025 GB 202502255
(71) Applicant: Jaguar Land Rover Limited, Coventry CV3 4LF (GB)
(72) Inventor: Little, Oliver, Coventry, CV3 4LF (GB); Lawes, Bradley, Coventry, CV3 4LF (GB)
(74) Representative: Jaguar Land Rover Patents Department

(57) **Abstract**

A bracket for mounting a display unit to a vehicle body structure is provided. The bracket comprises a body comprising a first side member, a second side member and a bridge member connected to and extending between the first and second side members. The bracket includes a first fixture arrangement configured to connect a display unit to the body, and a second fixture arrangement configured to connect the body to a vehicle body structure. The body comprises at least one weakened portion between the bridge member and the first and second side members configured to break when the bridge member is subjected to a force exceeding a predetermined value. The weakened portion is arranged such that the bridge member is disconnectable from at least one of the first and second side members when the weakened portion breaks.

## Description

### TECHNICAL FIELD

The present disclosure relates to a bracket for mounting a display unit to a vehicle body structure. Aspects of the invention relate to a display system for an automotive vehicle, and to a vehicle comprising said display system.

### BACKGROUND

It is known to provide rear-view mirrors within vehicle cabins to allow a vehicle operator or occupant to view an area directly behind the vehicle. Such mirrors are often mounted on (or adjacent to) the roof of the vehicle cabin. However, in vehicles featuring a low roofline, or in vehicles in which the windscreen is steeply raked, positioning the rear-view mirror on (or adjacent to) the roof of the vehicle cabin can result in the rear-view mirror being positioned very close to the headspace of the vehicle operator and may therefore obstruct a portion of the vehicle operator's forward view out of the vehicle cabin.

As such, in some vehicles, it may be preferable to provide and secure a display unit that can function as the rear-view mirror at other locations about the vehicle cabin. Issues can arise if an external force is applied to the secured display unit. For example, the display unit may become crushed or damaged. The display unit may be expensive and complicated to repair, and so such damage can lead to costly and time-consuming repairs.

The present disclosure aims to overcome, or at least mitigate, one or more problems associated with the prior art.

### SUMMARY OF THE INVENTION

Aspects and embodiments of the invention provide a bracket for mounting a display unit to a vehicle body structure, a display system for an automotive vehicle, and a vehicle.

According to an aspect of the invention, there is provided a bracket for mounting a display unit to a vehicle body structure, the bracket comprising: a body comprising a first side member, a second side member and a bridge member connected to and extending between the first and second side members; wherein the body comprises at least one weakened portion between the bridge member and the first and second side members configured to break when the bridge member is subjected to a force exceeding a predetermined value, the weakened portion being arranged such that the bridge member is disconnectable from at least one of the first and second side members when the weakened portion breaks.

The bracket optionally comprises a first fixture arrangement configured to connect a display unit to the body.

The bracket optionally comprises a second fixture arrangement configured to connect the body to a vehicle body structure.

Advantageously, the bracket can effectively mount a display unit to a vehicle body structure, providing a robust connection with minimal vibration issues. In some instances, an external force may be applied to the bracket and/or one or more components connected thereto, such as the display unit. In such a scenario, the display unit may be damaged. Implementing a weakened portion to the body of the bracket advantageously facilitates the breaking of the bracket in response to such a force, thus at least partially disconnecting the display unit from the vehicle body structure and preventing significant damage to the display unit. For example, the display unit may become crushed if exposed to a continuous force, whereas the weakened portion may promote the display unit being moved away from the path of the force before becoming significantly damaged. The display unit can be expensive and complicated to repair, whereas the bracket is a comparatively cheaper component. In this way, configuring the bracket to be sacrificially and intentionally broken in the event of an excessive force can reduce the complexity and expense of replacing components of the vehicle.

In some arrangements, the weakened portion may be referred to as a fracture point, a fracture surface, a breakable region, or a frangible portion.

The vehicle body structure may be an interior vehicle body structure.

The interior vehicle body structure may be a cross body beam of an instrument panel.

Optionally, the first fixture arrangement is provided on the bridge member.

In such an arrangement, the bracket is configured so that display unit is connected to the bridge member when assembled. Advantageously, the display unit will be moveable with the bridge member if/when the weakened portion is broken, moving the display unit away from the force applied to break the weakened portion and thereby reducing the risk of damage to the display unit.

The first fixture arrangement may comprise at least one fixing aperture extending through the bridge member.

Advantageously, the fixture arrangement allows for precise alignment of the display unit in the bracket, improving user experience.

The second fixture arrangement is optionally provided on at least one of the first and second side members.

Advantageously, the bracket connects to the vehicle body structure via its side members. This provides for increased structural stability of the bracket and the components connected thereto when assembled.

The second fixture arrangement may comprise at least one fixing aperture extending through at least one of the first and second side members.

Advantageously, the fixture arrangement allows for precise alignment of the bracket, improving user experience.

The second fixture arrangement may be provided on the first side member and on the second side member.

The second fixture arrangement comprises at least one fixing aperture extending through each of the first and second side members.

Advantageously, the bracket is more balanced when connected, resulting in a more robust and rigid connection of components with reduced vibration.

The second fixture arrangement optionally comprises a metal insert or lining provided inside a fixing aperture of the second fixture arrangement.

Advantageously, the connection between the bracket and the vehicle body structure can be robust and durable, reducing the risk that the bracket will become detached from the vehicle body structure.

Optionally, the bridge member and the first and second side members are integrally formed.

Advantageously, the bracket provides increased structural integrity, removing the need for joints or fixtures between the bridge and side members, which may increase vibrations and provide points of weakness that may result in the bracket breaking at an undesired location in response to a force.

The bracket may be formed from a polymer by moulding.

Advantageously, the bracket is lightweight with reduced noise and vibration issues.

The body may comprise at least one weakened portion between the bridge member and the first side member and at least one weakened portion between the bridge member and the second side member such the bridge member disconnects from the first and second side members when the weakened portions are broken.

Advantageously, the positioning of the weakened portions promotes the intentional breaking of the bracket to completely disconnect the bridge member from the side members when subjected to a force exceeding a predetermined value. This can further reduce the risk that components connected to the bracket become significantly damaged, since they can be removed from the path of the force when the weakened portions break.

Optionally, the bridge member comprises one or more reinforcement ribs.

Advantageously, the reinforcement ribs can improve the rigidity of the bridge member. The reduces the likelihood that the bridge member itself will flex or break when subjected to a force, and instead promotes the bracket breaking at the weakened portion(s) when the bridge member is subjected to the force. Promoting a break of the bracket at the desired location (e.g. at the weakened portions) can reduce damage to components attached to the bracket.

Optionally, the at least one weakened portion is defined by a region of reduced thickness of the body.

Advantageously, the configuration of the weakened portion ensures that the bracket will reliably break at a predetermined force, thereby protecting components attached from significant damage.

Optionally, the at least one weakened portion is defined by at least one groove in a surface of the body.

Advantageously, the weakened portion provides a controlled and predictable breaking point. This design ensures that the bracket will fracture at a specific force, effectively preventing significant damage to other components connected thereto. The groove facilitates simple and precise manufacturing of the bracket, and enhances the reliability of the weakened portion.

Optionally, the at least one groove comprises two surfaces that intersect to define a generally V-shaped groove.

In this way, the weakened portion is designed to break consistently at or around the point of intersection between the surfaces of the groove. This design promotes a predictable and controlled break point, enhancing the reliability of the weakened portion.

The at least one weakened portion may be defined by at least one hole extending through the body. The at least one weakened portion may comprise a plurality of holes. The at least one weakened portion may be defined by a plurality of perforations or slots.

Advantageously, the at least one hole provides a precise and controlled breaking point. This provides a bracket that will fracture predictably under a predetermined force, effectively absorbing impact energy and preventing significant damage to other components. The holes can be easily manufactured and adjusted to fine-tune the breaking force, enhancing the reliability of the weakened portion.

The weakened portion may comprise a fixing member arranged to secure the bridge member to at least one of the first and second side members. The fixing member may be configured to break when the bridge member is subjected to the force exceeding a predetermined value.

Advantageously, the bridge member can disconnect from the side members without the bracket being irreversibly broken. Instead, the fixing member can be simply replaced, and the bridge member reattached to the side members in the event the bridge member disconnects from the side members.

The weakened portion may be configured to break when subjected to a force exceeding a predetermined value in a substantially vertical direction, such that the bridge member is moveable in a downward direction when the weakened portion breaks.

Advantageously, the bridge member can move toward a floor of the vehicle when the weakened portion breaks, preventing damage to any other components inside the vehicle. It will be understood that the substantially vertical direction is a direction towards the floor of the vehicle and substantially perpendicular to the span of the bridge member.

According to a further aspect of the invention, there is provided a display system for an automotive vehicle, comprising: a bracket as described herein; and a display unit coupled to the bracket.

The display system benefits from the advantages of the bracket described herein.

The bridge member may define a space into which the display unit can be at least partially received.

Advantageously, the bracket can provide for enhanced stability of the display unit when connected to the bracket, improving the user experience. In addition, the assembly of the display unit and the bracket is more compact, occupying less space in the vehicle.

The bridge member may comprise a planar surface configured to abut against a corresponding planar surface of the display unit.

Advantageously, the corresponding planar surfaces provide for a precise fit between the bracket and the display unit, helping to dampen vibrations therebetween.

The bracket may comprise at least one further fixture arrangement configured to connect the body to a further component of the vehicle.

Advantageously, the bracket is multi-functional, connectable to multiple components of the vehicle. The design is compact, reducing the need for separate brackets, saving space and simplifying the overall design.

The further component may comprise at least one of a HVAC system, or a component of an entertainment system.

The display unit may comprise a rear-view display screen.

Advantageously, it has been found that traditional "roof mounted" rear-view display screens are not ergonomic when mounted at other regions about the vehicle cabin. As such, the provision of the rear-view display unit presents the vehicle operator with a different, more ergonomic viewing area.

According to an aspect of the invention, there is provided a vehicle comprising the display system as described herein.

The vehicle benefits from the advantages of the bracket described herein.

The vehicle may comprise a vehicle body structure connected to the bracket.

The vehicle may further comprise a camera configured to capture an image of an area behind the vehicle during use. The display unit (e.g. a display screen of the display unit) may be configured to display said image from the camera to a vehicle operator.

Advantageously, the camera can provide an image of the area behind the vehicle in real time during use, facilitating the replacement of a traditional rear-view mirror.

Within the scope of this application, it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of a vehicle;
Figure 2 shows a schematic representation of a portion of a vehicle cabin;
Figure 3 shows a perspective view of a display system in accordance with an embodiment of the invention;
Figure 4 shows a perspective view of a bracket in accordance with an embodiment of the invention;
Figure 5 shows a front perspective view of the bracket of Figure 5;
Figure 6 shows a side perspective view of the display system illustrated in Figure 3 connected to further components of a vehicle.

### DETAILED DESCRIPTION

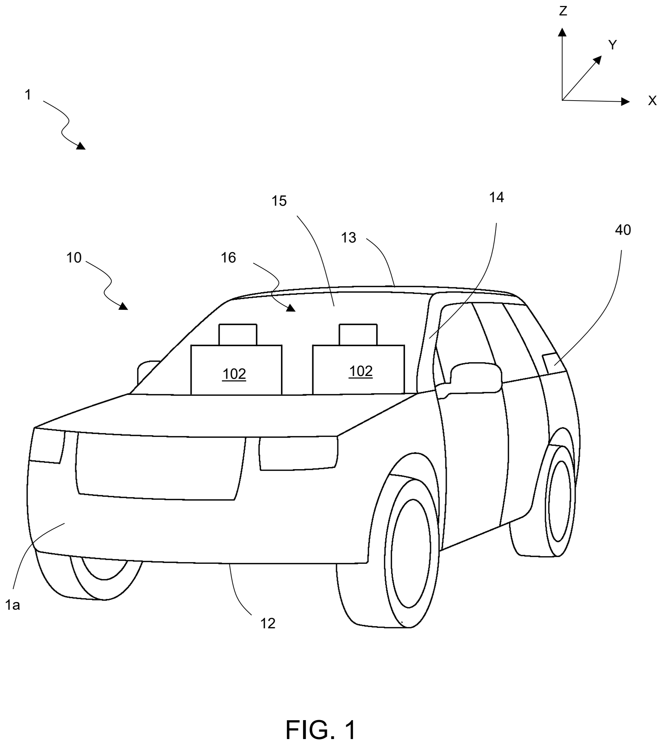

A vehicle 1 in accordance with an embodiment of the present invention is described herein with reference to the accompanying Figure 1. As shown in Figure 1, the vehicle 1 includes a vehicle body 10 having a floor structure 12 and a roof structure 13. The vehicle body 10 also defines a vehicle cabin 16 (or "interior") in which passengers may sit. The floor structure 12 defines at least a lower portion of the vehicle cabin 16 and may be characterised as corresponding to the floor and sub-structure of the vehicle 1, for example between its front axle and its rear axle. The roof structure 13 defines at least an upper portion of the vehicle cabin 16. The vehicle body 10 further comprises pillars 14 (which may be termed A-pillars) which support both the roof structure 13 of the vehicle body 10 and a windscreen 15.

It shall be appreciated that the vehicle body 10 may also be further defined by one or more additional vehicle structures which, along with the aforementioned structures, may collectively be referred to as a body in white or a portion of the body in white. For example, the body in white may include a series of vehicle structures coupled together, for example using welding.

As shown in Figure 1, the vehicle cabin 16 may include one or more seats 102 to support a passenger and/or an operator of the vehicle 1. Generally, an occupant of the vehicle cabin 16 may be referred to as a vehicle operator. The vehicle cabin 16 may be positioned towards the front 1a of the vehicle 1, the front 1a of the vehicle 1 being defined herein by the usual direction of travel of the vehicle 1. The vehicle cabin 16 may also extend across substantially the full width of the vehicle 1.

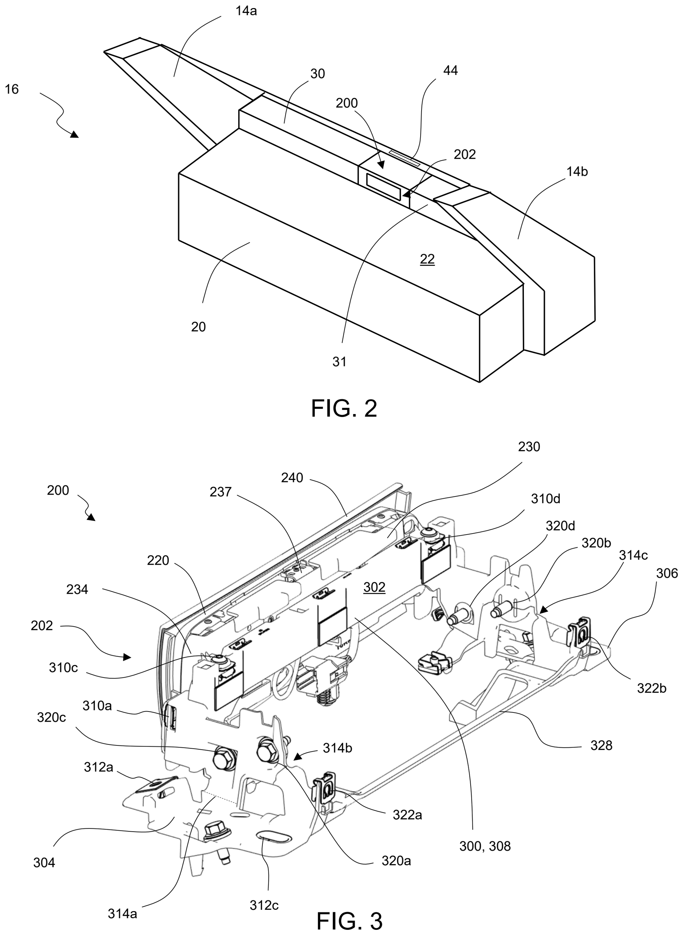

Figure 2 shows a schematic view of a portion of the vehicle cabin 16. The vehicle cabin 16 includes a first pillar 14a and a second pillar 14b on opposite sides of the vehicle cabin 16. The vehicle cabin 16 includes an interior vehicle body structure 20 that extends across a width of the vehicle cabin 16. The interior vehicle body structure 20 may be a cross body beam of an instrument panel 20, and may be referred to herein as an instrument panel 20 or instrument panel structure 20. The instrument panel 20 is positioned at a forward location of the vehicle cabin 16, forward here defined as being towards the front 1a of the vehicle 1. The instrument panel 20 is forward of the front seats 102 of the vehicle 1.

The instrument panel 20 defines a support structure for housing and/or supporting components within the vehicle cabin 16. Examples of these components may include an array of operator controls, a steering wheel, a glove compartment, and associated driving instrumentation, such as a speedometer, tachometer, odometer, oil gauge, fuel gauge, turning indicators, gearshift position inductors, navigation system display etc., for assisting the vehicle operator in controlling, operating and maintaining the vehicle 1. The instrument panel 20 may abut the A-pillars 14a, 14b as shown in Figure 2, which further support the windscreen 15 of the vehicle 1 (omitted from Figure 2 for clarity). The instrument panel may be coupled directly to the pillars 14a, 14b.

The vehicle cabin 16 may include a trim panel 30 coupled to the instrument panel 20. As shown in Figure 2, in the trim panel 30 may upstand from an upper surface 22 of the instrument panel 20 and extends at least partially across the width of the vehicle cabin 16. The upper surface 22 of the instrument panel 20 may be substantially planar as shown in Figure 2, which may improve the ease of coupling the trim panel 30 to the instrument panel 20. The trim panel 30 may be provided at a forward edge or location of the instrument panel 20, and as such may extend from the upper surface 22 of the instrument panel 20 towards the windscreen 15 of the vehicle 1.

The vehicle 1 may include a HVAC system. The HVAC system is not shown in the figures, and is generally located under the instrument panel 20 and/or the vehicle bonnet. The HVAC system may be configured to demist the windscreen 15. The HVAC system may include an airflow duct (not shown) connected to a duct outlet 44, commonly referred to as a windscreen defrost grill, that is configured to direct air towards the windscreen 15.

Figure 2 shows the vehicle cabin 16 with a display system 200 according to an embodiment of the present teachings. Although the display system 200 is described in combination with the vehicle cabin 16 of Figure 2, it shall be appreciated that the display system 200 may be used in any suitable vehicle cabin.

As shown in Figure 2, the trim panel 30 may include the display system 200. The display system 200 is therefore provided adjacent the upper surface 22 of the instrument panel 20 and/or towards the lower edge of the windscreen 15 as viewed from a vehicle operator within the vehicle cabin 16. Notably, it has been found that by positioning the display system 200 at a more forward position within the vehicle cabin 16, the display system 200 can be placed closer to the vehicle operator's nominal field-of-view. This helps to improve visual comfort since the forward position of the display system helps to reduce the amount by which the eye of the vehicle operator needs to adjust when switching between viewing the road and the display system 200.

In the illustrated embodiment, the display system 200 sits substantially flush with a front surface 31 of the trim panel 30. In other embodiments, it will be appreciated that the trim panel 30 and the display system 200 may be provided as separate components. Furthermore, it shall also be appreciated that in some alternative embodiments, the vehicle cabin 16 may comprise a display system 200 upstanding from the upper surface 22 of the instrument panel structure 20 with no trim panel 30.

The display system 200 includes a display unit 202. The display unit 202 may be configured to display an image of an area behind the vehicle 1. In this case, the display unit 202 may be referred to as a rear-view display unit 202. The vehicle 1 may therefore include a camera 40 (shown in Figure 1) arranged to capture an image of the area to the rear of the vehicle 1 during use. The display unit 202 may be configured to display a live stream of the image captured by the camera 40 such that a vehicle operator can see an image of the area behind the vehicle 1 in real time during use. As such, the display system 200 may replace a traditional rear-view mirror often provided in vehicle cabins. It shall also be appreciated that in some embodiments, the display unit 202 may be configured to display only an image from the camera (i.e. no further vehicle information) to reduce the likelihood of the vehicle operator becoming distracted when viewing the rear-view display unit 202.

The display unit 202 is positioned such that it is easily visible to a vehicle operator. This may be achieved, for example, by positioning the display system 200 (or at least the display unit 202 of the display system 200) in the centre of the width of the vehicle cabin 16 (optionally also in the centre of the instrument panel 20), as is shown in Figure 2. This may be advantageous since a common rear-view display unit position may be used for both left-hand and right-hand drive vehicles (i.e. vehicles where a vehicle operator sits towards the left and the right of the vehicle respectively). Similarly, the display system 200 may be positioned in the centre of the trim panel 30 such that a common trim panel 30 can be used for both left-hand and right-hand drive vehicles.

Referring to Figure 3, the display unit 202 may be made up of a display screen 220 (for example a rear-view display screen), a display unit housing 230, and a cover portion 240. The display unit 202 may include one or more printed circuit boards (not shown) which may be electrically connected to the screen 220. The display unit housing 230 may encase the printed circuit board and the display screen 220. The details of the display unit 202 are not central to the present invention and so, for conciseness, these shall not be described in further detail.

The display system 200 further includes a bracket 300. The bracket 300 is configured for mounting the display unit 202 to a vehicle body structure, for example the instrument panel 20. In Figure 3, the display unit 202 is coupled to the bracket 300.

The bracket will now be described in more detail with reference to Figures 3 to 6. The bracket 300 has a body 302 that includes a first side member 304, a second side member 306 and a bridge member 308 connected to and extending between the first and second side members 302, 304. The side members 302, 304 are laterally spaced apart and connected by the bridge member 306. In some arrangements, the bracket 300 is generally symmetrical relative to a central axis that extends perpendicularly to the spanwise direction of the bridge member 308 though the midpoint of the bridge member 308. The bridge member 308 may include two upwardly extending portions that extend generally upwardly from a respective side member 302, 304 and one spanwise portion that connects the two upwardly extending portions, for example so as to define a generally bridge-shaped member.

The bracket 300 includes a first fixture arrangement 310 configured to connect the display unit 202 to the body 302 and a second fixture arrangement 312 configured to connect the body 302 to a vehicle body structure. The vehicle body structure may be an internal body structure, for example the cross body beam of the instrument panel 20.

The first fixture arrangement 310 may be provided on the bridge member 308 as shown the figures. In this way, when the display system 200 is assembled, the display unit 202 connects to the bridge member 308 of the bracket 300. The bracket 300 may be configured such that the only connection between the bracket 300 and the display unit 202 is on the bridge member 308. It will be appreciated that the first fixture arrangement 310 may be provided elsewhere in alternative arrangements and/or may be provided in various locations of the bracket 300.

The first fixture arrangement 310 may include at least one fixing aperture extending through the bridge member 308. The fixing apertures are configured for receiving a fastener to connect the bracket 300 to the display unit 202. In some arrangements, the first fixture arrangement 310 includes a plurality of fixing apertures for connecting to different components and/or locations of the display unit 202. In the illustrated arrangement, the first fixture arrangement 310 includes four fixing apertures on the bridge member 308. The four fixing apertures includes a first pair of apertures 310a, 310b configured for connection with the display screen 220 of the display unit 202 and a second pair apertures 310c, 310d configured for connection with the display unit housing 230. The apertures in each pair may be spaced apart along the span of the bridge member 308.

The second fixture arrangement 312 may be provided on at least one of the first and second side members 304, 306. In this way, when the display system 200 is assembled, the bracket 300 connects to the vehicle body structure 20 via one or both side members 304, 306. In some arrangements, the second fixture arrangement 312 is provided on both the first and second side members 304, 306. The bracket 300 may be configured such that the only connection between the vehicle body structure 20 is via at least one of the first and second side members 304, 306. The second fixture arrangement 312 may include at least one fixing aperture extending through at least one of the side members 304, 306, e.g. for receiving a suitable fastener to connect the bracket 300 to the vehicle body structure 20. The second fixture arrangement 312 may include at least one fixing aperture extending through each of the first and second side members 304, 306. Including the second fixture arrangement 312 on both side members 304, 306 can provide for a balanced bracket 300 when assembled, resulting in a more robust and rigid connection between the components coupled to the bracket 300.

In the illustrated arrangement, the second fixture arrangement 312 includes four fixing apertures 312a, 312b, 312c, 312d, with two on each side member 304, 306. The four fixing apertures includes a third pair of apertures 312a, 312b located toward a rearward side of the bracket 300, e.g. distal the front of the vehicle 1 when assembled therein. The fixing apertures of the second fixture arrangement 312 includes a fourth pair of apertures 312c, 312d located toward a front side of the bracket 300, e.g. proximal the front of the vehicle 1 when assembled. One or more of the fixing apertures 312a, 312b, 312c, 312d may be configured for connection with different surfaces of the vehicle body structure 20, or may be configured for connection to different vehicle body structures than one another. The second fixture arrangement 312 may include a metal insert or lining 324 provided inside one or more fixing apertures 312a, 312b, 312c, 312d. In the illustrated arrangement, a metal insert 324 is provided inside the fourth pair of fixing apertures 312c, 312d. The metal insert or lining 324 is provided for a more robust connection between the bracket 300 and the vehicle body structure 20, reducing the risk that the bracket 300 becomes detached from the vehicle body structure 20 during normal operation.

Although the arrangement described includes the display unit 202 connected to the bridge member 308 and the side members 303, 306 connected to the vehicle body structure 20, it will be appreciated that the display unit 202 and vehicle body structure 20 may be connected via different parts of the bracket 300 in alternative arrangements. For example, the bracket 300 may include one or more fixture arrangements (e.g. holes, apertures or the like) for connecting to a wire harness.

The bridge member 308 may define a space into which the display unit 202 can be at least partially received. In the illustrated arrangement, the bridge member 308 has a planar surface 326 configured to abut against a corresponding planar surface of the display unit 202. Such an arrangement provides for enhanced stability of the display unit 202 in the bracket 300, reducing vibrations and reducing the space occupied by the display system 200.

In some arrangements, the bracket 300 includes a cross member 328 extending between the first and second side members 304, 306. The cross member 328 may be generally parallel to the spanwise portion of the bridge member 308. The cross member 328 may provide additional support to components connected to the bracket 300. For example, as will be discussed in more detail, the cross member 328 may hold components in place relative to the bracket 300. The cross member 328 is spaced apart from the bridge member 308 such that a gap is formed therebetween for receiving one or more components. The cross member 328 may improve ease of assembly of components to the bracket 300.

The bracket 300 can advantageously provide a structural connection between the instrument panel 20 and the display unit 202 that minimises vibrations. In some instances, external forces may be applied to the bracket 300 and/or one or more components connected to the bracket 300, such as the display unit 202. A continuous application of a force to components connected to the bracket 300 can lead to their damage, thereby requiring repair or replacement of components. The display unit 202 in particular can be expensive and complicated to repair. As such, it is desired to protect the display unit 202 from damage in an atypical load scenario. For this reason, the body 302 includes at least one weakened portion 314 between the bridge member 308 and the first and second side members 304, 306. The weakened portion 314 is configured to break when the bridge member 308 is subjected to a force exceeding a predetermined value. The weakened portion 314 is arranged such that the bridge member 308 is disconnectable from at least one of the first and second side members 304, 306 when the weakened portion 314 breaks. In arrangements in which the cross member 328 is present, the bridge member 308 may also be disconnectable from the cross member 328 when the weakened portion 314 is broken. Upon breaking of the bracket 300, the display unit 202 connected thereto can be at least partially disconnected from the instrument panel 20 so as to be removed from the impact of the force. In this way, the bracket 300 having the weakened portion 314 can be seen as a sacrificial component, intended to be intentionally damaged instead of other, more valuable components, in the event of an excessive force applied thereto. The weakened portion 314 may be referred to as a fracture point, a fracture surface, a breakable region, a frangible portion or the like in some arrangements.

The provision of the weakened portion 314 is particularly effective when the first fixture arrangement 310 is provided on the bridge member 308, e.g. when the bracket 300 is configured so that the display unit 202 is connectable to the bridge member 308. This results in the display unit 202 being moveable with the bridge member 308 in the event that the weakened portion 314 is broken, moving the display unit 202 away from the pathway of the force applied to break the weakened portion 314.

The weakened portion 314 may be configured to break when subjected to a force exceeding a predetermined value in a substantially vertical direction, such that the bridge member 308 is moveable in a downward direction when the weakened portion 314 breaks. In this way, the bridge member 308 and any components connected thereto can move toward a floor 12 of the vehicle 1 when the weakened portion breaks, reducing the risk of damage to other components in the vehicle 1. The weakened portion 314 may be configured such that the force required to break the weakened portion 314 is less than a force that breaks and/or damages the display unit 202. As such, the weakened portion 314 is designed to break prior to the display unit 202 when subjected to the same force.

The body 302 may include at least one weakened portion 314 between the bridge member 308 and the first side member 304. Although not shown, the body 302 may include at least one weakened portion 314 between the bridge member 308 and the second side member 306. In this way, the bridge member 308 can disconnect from the first and second side members 304, 306 when the weakened portions 314 are broken. In this arrangement, the bridge member 308 can completely disconnect from the remainder of the body 302 when subjected to a force exceeding a predetermined value. As noted above, the display unit 202 may be connected to the bridge member 308 and so the complete disconnection of the bridge member 308 can further reduce the risk of damage to the display unit 202, since the bridge member 308 and display unit 202 are completely disconnected from the vehicle body structure 20 and removed from the path of the force when the weakened portions 314 are broken. The arrangement of the weakened portion(s) on the first side member 304 may be substantially the same as the arrangement of weakened portion(s) on the second side member 306.

In the illustrated arrangement, a plurality of weakened portions 314 are provided between the first side member 304 and the bridge member 308 and a plurality of weakened portions 314 are provided between the second side member 306 and the bridge member 308. The bridge member 308 may extend from each side member 304, 306 at multiple locations. In this embodiment, a weakened portion 314 is provided at or proximal to each intersection of the bridge member 308 and the respective side member 304, 306. For example, in the figures, two weakened portions 314a, 314b are provided on the first side member 304 proximal to the two points at which the bridge member 308 extends from the first side member 304. A similar arrangement may be provided on the second side member 306. In the figures, only one weakened portion 314c can be seen between the second side member 306 and the bridge portion 308. The arrangement of weakened portions 314 may be the same on both sides. It will be appreciated that more weakened portions 314 may be provided in alternative arrangements, for example, to provide an improved failsafe arrangement in case one of the weakened portions 314 does not break.

The weakened portion 314 may be defined by one or more interruptions to the thickness of the body 302. The weakened portion 314 may be defined by one or more surface features of the body 302. The weakened portion 314 may include one or more shoulders, notches, grooves, holes, steps, recesses, bends, perforations, slots or the like that may promote the presence of localised stress concentrations. In some arrangements, the weakened portion 314 may be defined by the inclusion of material defects to the body 302, such as voids, hollow regions or cracks within the body 302 at the weakened portion 314. In some arrangements, the weakened portion 314 may be formed from a different material than the rest of the body 302, for example the weakened portion 314 may be formed from a material more likely to break when subjected to a force. It will be understood that any feature that can be incorporated into the body 302 to promote its breaking in a given region when the bridge member 308 subjected to a predetermined force may be considered as defining a weakened portion 314. In arrangements in which a plurality of weakened portions 314 are provided, one or more weakened portions 314 may be configured differently to one another.

In some arrangements, the at least one weakened portion 314 is defined by a region of reduced thickness of the body 302. It will be understood that the thickness of the body 302 relates to the thickness of the material from which the body 302 is formed. The relatively thinner weakened portion 314 is more likely to break when subjected to a predetermined force compared with other locations of the body 302, promoting a more reliable break of the weakened portion 314 when subjected to an excessive force. Configuring the weakened portion 314 to be a region of reduced thickness provides improved accuracy regarding the location of the break of the bracket 300, for example promoting a clean disconnection of the display unit 202 from the vehicle body structure 20 so as to remove the display unit 202 from the pathway of the force.

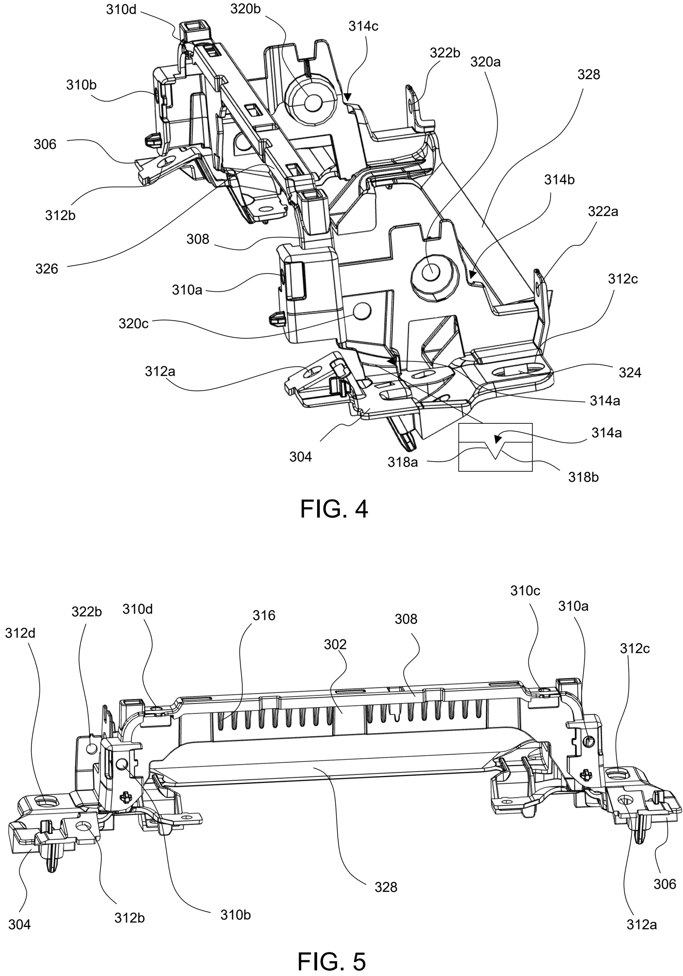

The weakened portion 314 and the bridge member 308 may be configured such that the force required to break the weakened portion 314 is less than the force required to break the bridge member 308. As such, the weakened portion 314 is designed to break prior to the bridge member 308 when subjected to the same force. The bridge member 308 may include one or more reinforcement arrangements to reduce the risk that the bridge member 308 will break prior to the weakened portion 314 breaking when subjected to a force. In some examples, the bridge member 308 may include one or more reinforcement ribs 316, for example as can be seen in Figure 5. In the illustrated arrangement, a plurality of reinforcement ribs 316 are provided along the spanwise portion of the bridge member 308. The reinforcement ribs 316 advantageously improve the rigidity of the bridge member 308, reducing the likelihood that the bridge member 308 will flex or break when subjected to a force, instead promoting the bracket 300 breaking at the desired weakened portion(s) when the bridge member 308 is subjected to an excessive force. The reinforcement ribs 316 may be omitted in alternative arrangements.

The weakened portion(s) 314 may be defined by at least one groove in a surface of the body 302. The groove may be referred to as a recess in some arrangements. The thickness of the weakened portion(s) 314 may be reduced compared to the rest of the body 302 due to at least the presence of the groove. The body 302 of the illustrated arrangement includes a plurality of grooves, each defining a respective weakened portion. As such, reference numeral 314 may be utilised interchangeably to refer to the weakened portion or to the groove.

The weakened portion 314 may be configured to have a point of increased stress concentration, such that the weakened portion 314 consistently breaks at this predetermined point when subjected to a significant load. In this way, the weakened portion 314 provides a predictable and controlled fracture point, enhancing the reliability of the weakened portion 314. Figure 4 shows a schematic cross-sectional view along a groove 314a. As can be seen, in some arrangements, the groove 314a includes two surfaces 318a, 318b that intersect to define a generally V-shaped cross-section. In such an arrangement, the weakened portion 314 is more likely to break consistently at the point of intersection between the two surfaces 318a, 318b of the groove 314a. The point of intersection creates a stress concentration point which is more likely to break under load than other locations of the body 302. This groove configuration promotes a predictable and controlled break point. It will be appreciated that the groove 314a may have a different configuration in alternative arrangements. For example, the groove 314a may include more than two surfaces with more than one sharp intersection point between adjacent surfaces. The groove 314b and/or the grooves 314c of the second side member 306 may be configured similarly to the groove 314a.

In some arrangements, the body 302 of the bracket 300 may be formed as a unitary part. The first side member 304, second side member 306 and the bridge member 308 may be integrally formed. The body 302 may be formed from a polymer by moulding. Integrally forming the side members 304, 306 and the bridge member 308 can improve the structural integrity of the bracket 300, reducing vibrations between separate parts as well as reducing the risk of the bracket 300 breaking during normal use or breaking in an undesired location.

In an alternative arrangement, the bridge member 308 and side members 304, 306 may be provided as separate components that are secured together, e.g. via a fixing member. In this arrangement, the weakened portion 314 may be defined by the fixing member(s) that connect the bridge member 308 to the side members 304, 306. The fixing member may be configured to break when the bridge member 308 is subjected to a force exceeding a predetermined value so as to detach the bridge member 308 from at least one of the side members 304, 306. Such an arrangement facilitates the disconnection of the bridge member 308 without irreversibly breaking the bracket 300. In this case, only the weakened portion 314 (e.g. the fixing member) requires replacement to repair the bracket 300.

The body 302 is typically formed of a polymeric material including, but not limited to, polypropylene, polyurethane, acrylonitrile butadiene styrene (ABS), and/or polyvinyl chloride (PVC). The use of such materials is generally advantageous due to their lightweight properties and the ease at which polymeric materials can be moulded (e.g., via injection moulding). However, it shall be appreciated that in other embodiments, other types of material may be utilised.

In some arrangements, the body 302 may include further fixture arrangements configured to connect the body 302 to a further component of the vehicle 1. The further component may include one or more of a HVAC system or a component of an entertainment system 46. In this way, the bracket 300 is multi-functional, providing a compact and lightweight means of connecting various components of the vehicle 1. For example, in the illustrated arrangement, a third fixture arrangement 320 is provided, which is configured to connect a component of an entertainment system 46 to the body 302. The third fixture arrangement 320 may include one or more fixing apertures in the body 302. In the figures, the third fixture arrangement 320 includes four fixing apertures 320a, 320b, 320c, 320d. The fixing apertures 320a, 320b, 320c, 320d are provided on the bridge member 308. Two fixing apertures may be provided on each upwardly extending portion of the bridge member 308 on opposite sides of the spanwise portion of the bridge member 308. A fourth fixture arrangement 322 may be provided, which is configured to connect a component of the HVAC system. The fourth fixture arrangement 322 may include one or more fixing apertures in the body 302. For example, in the illustrated arrangement, the fourth fixture arrangement 322 includes two fixing apertures 322a, 322b spaced apart from one another. The two fixing apertures 322a, 322b of the fourth fixture arrangement 322 may be provided on the side members 304, 306.

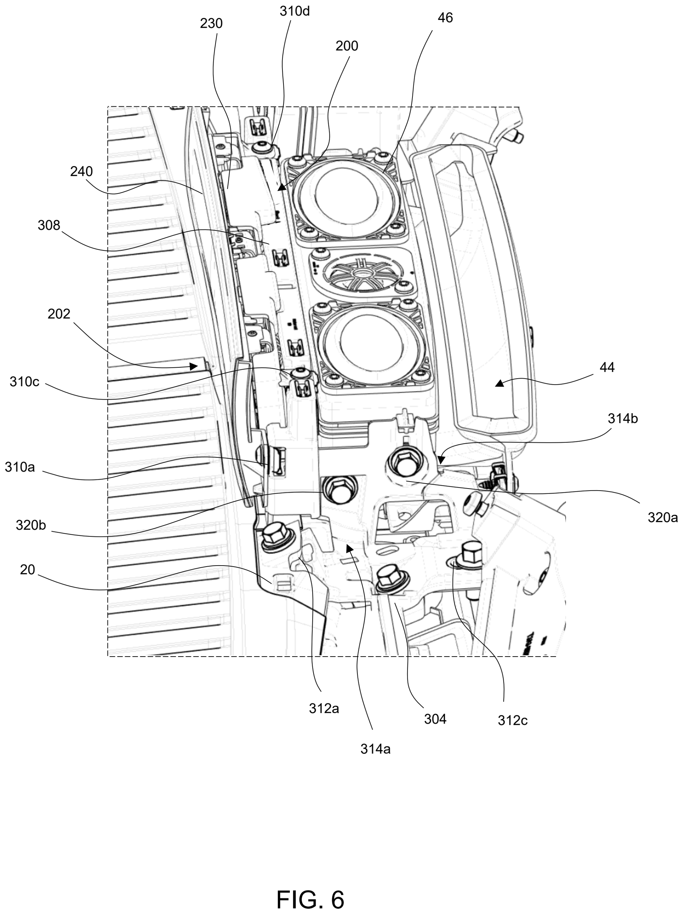

The fixture arrangements of the bracket 300 may be located such that, when the bracket 300 is installed in a vehicle 1, the display unit 202 is connected to a rear facing side of the bracket 300 and the HVAC system is connected to a front facing side of the bracket 300, for example as is shown in Figure 6. The component of the entertainment system 46 may be connected to locate between the display unit 202 and the HVAC system. A component of the entertainment system 46 and of the HVAC system may be received in the gap defined between the bridge member 308 and the cross member 328. The cross member 328 may hold the HVAC system in place relative to the bracket 300 to improve the connection therebetween. The bracket 300 may be configured such that space between components connected thereto is minimised to occupy minimal space in the vehicle 1.

It will be appreciated that various changes and modifications can be made to the present invention without departing from the scope of the present application. It should also be noted that whilst the appended claims set out particular combinations of features described above, the scope of the present disclosure is not limited to the particular combinations hereafter claimed, but instead extends to encompass any combination of features herein disclosed.

## Claims

1. A bracket for mounting a display unit to a vehicle body structure, the bracket comprising:
a body comprising a first side member, a second side member and a bridge member connected to and extending between the first and second side members;
a first fixture arrangement configured to connect a display unit to the body; and
a second fixture arrangement configured to connect the body to a vehicle body structure;
wherein the body comprises at least one weakened portion between the bridge member and the first and second side members configured to break when the bridge member is subjected to a force exceeding a predetermined value, the weakened portion being arranged such that the bridge member is disconnectable from at least one of the first and second side members when the weakened portion breaks.

2. The bracket of claim 1, wherein the first fixture arrangement is provided on the bridge member.

3. The bracket of claim 1 or claim 2, wherein the second fixture arrangement is provided on at least one of the first and second side members.

4. The bracket according to claim 3, wherein the second fixture arrangement comprises a metal insert or lining provided inside a fixing aperture of the second fixture arrangement.

5. The bracket of any preceding claim, wherein the bridge member and the first and second side members are integrally formed.

6. The bracket of any preceding claim, wherein the body comprises at least one weakened portion between the bridge member and the first side member and at least one weakened portion between the bridge member and the second side member such the bridge member disconnects from the first and second side members when the weakened portions are broken.

7. The bracket of any preceding claim, wherein the bridge member comprises one or more reinforcement ribs.

8. The bracket of any preceding claim, wherein the at least one weakened portion is defined by a region of reduced thickness of the body.

9. The bracket of any preceding claim, wherein the at least one weakened portion is defined by at least one groove in a surface of the body.

10. The bracket of claim 9, wherein the at least one groove comprises two surfaces that intersect to define a generally V-shaped groove.

11. The bracket of any preceding claim, wherein the weakened portion is configured to break when subjected to a force exceeding a predetermined value in a substantially vertical direction, such that the bridge member is moveable in a downward direction when the weakened portion breaks.

12. A display system for an automotive vehicle, comprising:
a bracket according to any preceding claim; and
a display unit coupled to the bracket.

13. The display system of any preceding claim, wherein the bridge member of the bracket defines a space into which the display unit can be at least partially received.

14. The display system of any preceding claim, wherein the bridge member of the bracket comprises a planar surface configured to abut against a corresponding planar surface of the display unit.

15. A vehicle comprising the display system according to any of claims 12 to 14.
